Europäisches Patentamt

**European Patent Office**

**Office européen des brevets**

(19)

(11) Numéro de publication: **0 251 868**
**B1**

(12) ## FASCICULE DE BREVET EUROPEEN

(45) Date de publication du fascicule du brevet: **23.01.91**

(51) Int. Cl.⁵: **H 04 H 7/00,** H 04 N 5/268

(21) Numéro de dépôt: **87401395.6**

(22) Date de dépôt: **19.06.87**

(54) Dispositif d'indentification des sources connectées à une grille de commutation, et grille associée à un tel dispositif.

(30) Priorité: **24.06.86 FR 8609099**

(43) Date de publication de la demande:
**07.01.88 Bulletin 88/01**

(45) Mention de la délivrance du brevet:
**23.01.91 Bulletin 91/04**

(84) Etats contractants désignés:
**DE GB**

(56) Documents cités:
**DE-A-2 238 030**
**US-A-4 308 559**

**PATENT ABSTRACTS OF JAPAN, vol. 5, no. 149
(E-75)821r, 19 septembre 1981; & JP-A-56 83 152**

(73) Titulaire: **THOMSON VIDEO EQUIPEMENT
17, rue du Petit Albi
F-95800 Cergy Saint Christophe (FR)**

(72) Inventeur: **Surjon, Claude
Thompson CSF SCPI 19, Avenue de Messine
F-75008 Paris (FR)**

(74) Mandataire: **Courtellemont, Alain et al
THOMSON-CSF SCPI
F-92045 PARIS LA DEFENSE CEDEX 67 (FR)**

Courier Press, Leamington Spa, England.

## Description

La présente invention se rapporte au domaine des grilles de commutation et plus particulièrement à l'identification de celle des sources connectées aux entrées d'une grille qui est connectée à une sortie donnée de la grille. Les grilles de commutation, aussi appelées matrices de commutation, sont de plus en plus utilisées; ce sont de dispositifs à N entrées et P sorties, permettant d'affecter, au choix, à l'une quelconque des P sorties, un et un seul des signaux présents sur les N entrées. Ces grilles sont utilisées, en particulier, en télévision, dans les centres de production ou de diffusion; dans ces centres de production ou de diffusion télévisuelle les dispositifs d'identification permettent aux exploitants de connaître rapidement l'origine des signaux qui leur sont affectés.

Il est connu der lier, à chaque source connectée à une entrée d'une grille de commutation, un circuit de codage qui fournit un message fixe additionné au signal de la source. Les messages étant tous différents d'une source à l'autre, permettent, grâce à un circuit de décodage branché sur une sortie de la grille et suivi de moyens d'affichage, d'identifier celle des sources qui est reçue par la sortie considérée; avant son utilisation, ailleurs que dans le circuit de décodage, le signal provenant de la source et reçu par la sortie considérée, doit être débarrassé du message fixe par un circuit d'effacement. Ces dispositifs d'identification connus présentent différents inconvénients: ils nécessitent en amount de la grille l'adjonction d'un message de code au signal de chacune des sources et, en aval de la grille, l'effacement de ce message avant de pouvoir utiliser le signal provenant d'une source; de plus, ces dispositifs connus, lorsque les signaux de sources sont des signaux vidéo de télévision, les moyens d'affichage viennent s'ajouter à l'écran de contrôle dont dispose l'exploitant d'une sortie de la grille.

La présente invention a pour but d'éviter ou pour le moins de réduire les inconvénients précites. Ceci est obtenu, en particulier, en effectuant toute l'identification en aval de la grille de commutation et en utilisant pour cela les signaux de commande c'est-à-dire les signaux d'affectation entrées-sorties de la grille de commutation.

Selon l'invention un dispositif d'identification des N sources connectées à une grille de commutation à N entrées et P sorties (N et P entiers positifs avec, au moins, N supérieur à 1), la grille étant commandée par des signaux de commande, le dispositif comportant des moyens d'affichage associés à une sortie donnée parmi les P sorties pour afficher une indication prédéterminée, représentative de l'entrée à identifier c'est-à-dire de celle des N entrées qui est en liaison électrique avec la sortie donnée, quand la grille est commandée pour établir une liaison entre une des N entrées et la sortie donnée, est caractérisé en ce qu'il comporte des moyens de décodage associés à la sortie donnée pour déterminer, à partir des signaux de commande, quelle est l'entrée à identifier et fournir un signal de repérage représentatif de l'entrée à identifier et en ce que les moyens d'affichage sont couplés aux moyens de décodage.

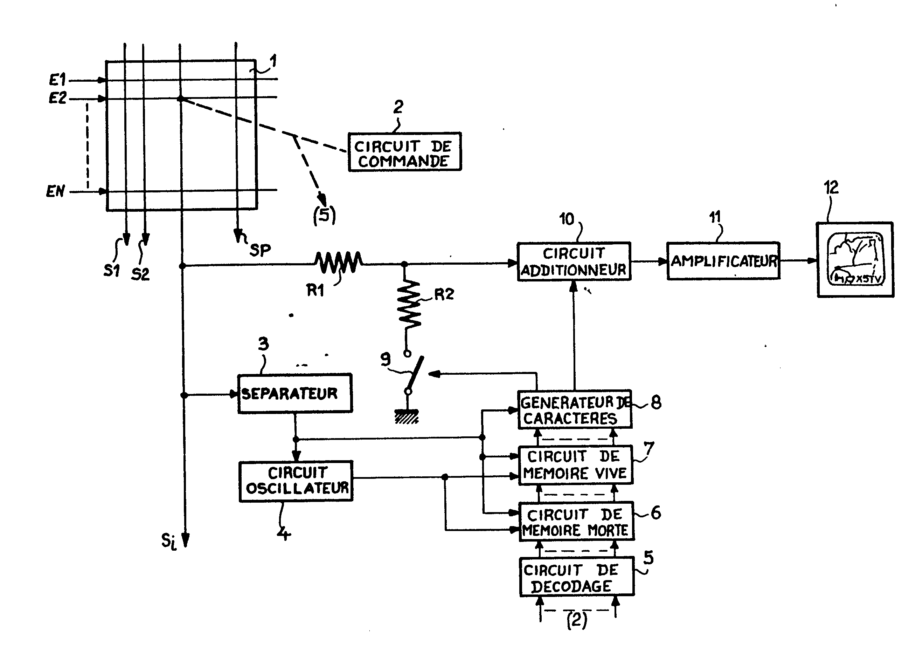

La présente invention sera mieux comprise et d'autres caractéristiques apparaîtront à l'aide de la description ci-après et de la figure s'y rapportant qui représente un dispositif d'identification selon l'invention.

La figure représente une grille de commutation, 1, comportant N entrées E1 à EN et P sorties S1 à SP. Dans l'exemple décrit N=10 et P=10.

Sur chacune des N entrées de la grille 1 est branchée une source de signal, non représentée, qui, dans l'exemple décrit, est une source de signal vidéo de télévision. La figure se rapporte au problème de l'identification de celle des sources qui, à un moment donné, sous le contrôle d'un circuit de commande, 2, de la grille 1, est reliée par la grille 1 à une sortie parmi les sorties S1 à SP; ce problème se ramène donc, connaissant les sources branchées sur les entrées, à identifier l'entrée qui est, à un moment donné, reliée par la grille à la sortie considérée.

L'exemple qui est décrit à l'aide de la figure se rapporte à un centre de diffusion télévisuelle dans lequelle l'identification des sources n'est nécessaire que pour cinq des sorties de la grille. Cette identification se fait à l'aide de cinq dispositifs d'identification réalisé tous de la même façon et associés respectivement aux cinq sorties; sur la figure seul le dispositif d'identification associé à la sortie Si a été représenté.

Lorsque, à un moment donné, le circuit de commande 2 fournit un signal de commande pour établir une liaison entre une entrée et une sortie de la grille 1, ce signal est envoyé non seulement à la grille pour établir effectivement la liaison mais également sur les entrées d'un circuit de décodage 5. Le circuit de décodage fournit N signaux de repérage distincts: un pour chacun des signaux relatifs aux liaisons entre la sortie Si et les N entrées de la grille. Quand un de ces N signaux apparaît il est envoyé sur un circuit de mémoire morte 6 (mémoire morte: ROM dans la littérature anglo-saxonne) afin que ce circuit fournisse, sous forme de signaux logiques, des caractères qui sont stockés dans un circuit de mémoire vive 7 (mémoire: RAM dans la littérature anglo-saxonne) tant que la liaison est établie par la grille 1. Dans le cas représenté, où la sortie Si est en liaison avec l'entrée E2 et où la source, non représentée, qui est branchée sur l'entrée E2 est désignée sous la référence X5TV, le circuit de mémoire vive 7 reçoit le texte d'identification "X5TV" et le délivre, toujours sous forme de signaux logiques, à un générateur de caractères 8. Le générateur de caractères 8, effectue une conversion numérique-analogique, grâce à un registre parallèle-série et délivre des signaux qui sont employés comme signaux vidéo de télévision, ces signaux, qui constituent, sous forme analogique, le texte d'identification sont appliqués à la seconde entrée d'un circuit additionneur 10 pour réaliser une incrustation dans l'image de télévision relative au signal vidéo reçu par première entrée de l'additionneur 10 et provenant de la sortie Si. La sortie du circuit additionneur 10 est reliée, par un amplificateur 11, à un écran de contrôle de télévision 12 où l'indication X5TV apparaît en incrustation dans l'image.

La technique de l'incrustation étant une technique classique en télévision, les circuits d'entrée des circuits de mémoire 6 et 7 et du générateur 8, qui permettent de commander l'incrustation en une zone prédéterminée de l'image n'ont été représentés. Par contre les circuits permettant d'obtenir les signaux de synchronisation nécessaire à ces circuits d'entrée ont été représentés; il s'agit d'un séparateur 3 destiné à extraire les signaux de synchronisation ligne et trame du signal de la sortie Si, et d'un circuit oscillateur 4. Le séparateur envoie les signaux de synchronisation ligne et trame sur les circuits d'entrée des circuits de mémoires 5 et 6 et du générateur 8 et sur l'entrée du circuit oscillateur 4 qui est un oscillateur asservi délivrant un signal de fréquence 2,7 MHz, multiple de la fréquence des signaux de synchronisation ligne.

Il est à noter que le dispositif d'identification selon la figure comporte un circuit d'écrasement du signal vidéo fourni, par la sortie Si, au circuit additionneur 10. Ce circuit d'écrasement est un circuit affaiblisseur à entrée de commande et est constitué par une résistance R1 de 1kohms, branchée entre la sortie Si de la grille 1 et la première entrée du circuit additionneur 10, et par une résistance R2 de 240 ohms et un interrupteur 9 en série entre la masse et la première entrée du circuit additionneur 10. L'interrupteur 9 est commandé par les circuits d'entrée du générateur de caractères 8 pour ser fermer pendant, et seulement pendant, la zone d'incrustation, afin de donner un fond gris aux caractères, inscrits en blanc, du texte d'identification.

La présente invention n'est pas limitée à l'exemple décrit, c'est ainsi, en particulier, que le texte, d'identification peut avoir ses propres moyens d'affichage; et ces moyens d'affichage, qui ne reçoivent pas le signal provenant d'une source mais sont seulement couplés au circuit de décodage, peuvent être constitués par de simples ampoules: une par source à identifer.

## Revendications

1. Dispositif d'identification des N sources connectées à une grille de commutation (1) à N entrées et P sorties (N et P entiers positifs avec, au moins, N supérieur à 1), la grille étant commandée par des signaux de commande, le dispositif comportant des moyens d'affichage (11, 12) associés à une sortie donnée (Si) parmi les P sorties pour afficher une indication prédéterminée, représentative de l'entrée à identifier c'est-à-dire de celle (E2) des N entrées qui est en liaison électrique avec la sortie donné, quand la grille est commandée pour établir une liaison entre une des N entrées et la sortie donnée, caractérisé en ce qu'il comporte des moyens de décodage (5) associés à la sortie donnée (Si) pour déterminer, à partir des signaux de commande, quelle est l'entrée à identifier et fournir un signal de repérage représentatif de l'entrée à identifier et en ce que les moyens d'affichage (11, 12) sont couplés aux moyens de décodage (5).

2. Dispositif d'identification selon la revendication 1, caractérisé en ce que les moyens d'affichage (11, 12) comportent un écran de contrôle de télévision (12) et en ce que le dispositif comporte un circuit additionneur (10) avec une première et une seconde entrée et une sortie couplés respectivement à la sortie donnée (Si), aux moyens de décodage (5) et aux moyens d'affichage (11, 12) et en ce que les moyens de décodage (5) sont couplés au circuit additionneur (10) par des circuits à mémoire (6, 7) contenant l'indication à afficher en fonction du signal de repérage fourni par les moyens de décodage (5).

3. Dispositif d'identification selon la revendication 2, caractérisé en ce qu'il comporte un circuit d'écrasement (9, R1, R2) pour coupler la sortie donnée (Si) au circuit additionneur (10), ce circuit d'écrasement ayant une entrée de commande couplée aux circuits à mémoire (6, 7), pour affaiblir le niveau du signal sur la première entrée du circuit additionneur (10) pendant que la seconde entrée du circuit additionneur reçoit un signal.

4. Dispositif de commutation comprenant une grille de commutation et un dispositif d'identification selon l'une quelconque des revendications précédentes, caractérisé en ce que la grille comporte au moins une sortie à laquelle est associé ledit dispositif d'identification.

## Patentansprüche

1. Vorrichtung zur Identifizierung von N mit einem Schaltgatter (1) mit N Eingängen und P Ausgängen (N und P positive ganze Zahlen, wobei wenigstens N größer als 1 ist) verbundenen Quellen, wobei das Gatter durch Steuersignal gesteuert wird, wobei die Vorrichtung Anzeigemittel (11, 12) umfaßt, die mit einem gegebenen Ausgang (Si) der P Ausgänge verbunden ist, um eine bestimmte Mitteilung anzuzeigen, die den zu identifizierenden Eingang, d.h. denjenigen (E2) der N Eingänge, der mit dem gegebenen Ausgang in elektrischer Verbindung steht, darstellt, wenn das Gatter so gesteuert wird, daß es eine Verbindung zwischen den N Eingängen und dem gegebenen Ausgang herstellt, dadurch gekennzeichnet, daß sie Dekodierungsmittel (5) umfaßt, die mit dem gegebenen Ausgang (Si) verbunden sind, um anhand der Steuersignale zu bestimmen, welcher der zu identifizierende Eingang ist, und um ein den zu identifizierenden Eingang darstellendes Kennzeichnungssignal zu liefern, und daß die Anzeigemittel (11, 12) mit den Dekodierungsmitteln (5) gekoppelt sind.

2. Vorrichtung zur Identifizierung gemäß Anspruch 1, dadurch gekennzeichnet, daß die Anzeigemittel (11, 12) einen Fernsehmonitor (12) umfassen und daß die Vorrichtung eine Addierschaltung (10) mit einem ersten und einem zweiten Eingang und einem Ausgang, die mit dem gegebenen Ausgang (Si) bzw. mit den Dekodierungsmitteln (5) bzw. mit den Anzeigemitteln (11, 12) gekoppelt sind, und daß die Dekodierungsmittel (5) mit der Addierschaltung (10) über Speicherschaltungen (6, 7) gekoppelt sind, die die Mitteilung enthalten, die in Abhängigkeit vom von den Dekodierungsmitteln (5) gelieferten Kennzeichnungssignal anzuzeigen ist.

3. Vorrichtung zur Identifizierung gemäß Anspruch 2, dadurch gekennzeichnet, daß sie eine Dämpfungsschaltung (9, R1, R2) für die Kopplung des gegebenen Ausgangs (Si) an die Addierschaltung (10) umfaßt, die einen mit den Speicherschaltungen (6, 7) gekoppelten Steuereingang besitzt, um den Signalpegel am ersten Eingang der Addierschaltung (10) abzusenken, wenn der zweite Eingang der Addierschaltung ein Signal empfängt.

4. Schaltvorrichtung mit einem Schaltgatter und einer Vorrichtung zur Identifizierung gemäß einem der vorangehenden Ansprüche, dadurch gekennzeichnet, daß das Gatter wenigstens einen Ausgang umfaßt, mit dem die Vorrichtung zur Identifizierung verbunden ist.

**Claims**

1. A device for the identification of N sources connected with a switching matrix (1) having N inputs and P outputs (N and P being integral positive numbers with at least N being greater than 1), the matrix being controlled by control signals, the device comprising display means (11 and 12) associated with a given output (Si) among P outputs in order to display a predetermined indication, representative of the input to be identified that is to say the input (E2) of the N inputs which is in a state of electrical connection with the given output when the matrix is controlled in such a manner as to establish a connection between one of the N inputs and the given output, characterized in that it comprises decoding means (5) associated with the given output (Si) in order to determine, on the basis of the control signals, which is the input to be identified and to furnish a reference signal representative of the input to be identified and in that the display means (11 and 12) are coupled with the decoding means (5).

2. The identifying device as claimed in claim 1, characterized in that the display means (11 and 12) comprise a television monitor screen (12) and in that the device comprises an adding circuit (10) with a first and with a second input and an output coupled respectively with the given output (Si), with the decoding means (5) and with the display means (11 and 12) and in that the decoding means (5) are coupled with the adding circuit (10) by memory circuits (6 and 7) containing the indication to be displayed as a function of the reference signal provided by the decoding means (5).

3. The identifying device as claimed in claim 2, characterized in that it comprises a compressing circuit (9, R1 and R2) in order to couple the given output (Si) with the adding circuit (10), said compressing circuit having a control input coupled with the memory circuits (6 and 7) in order to reduce the level of the signal at the first input of the adding circuit (10) while the second input of the adding circuit is receiving a signal.

4. A switching device comprising a switching matrix and an identifying device as claimed in any one of the preceding claims, characterized in that the matrix comprises at least one output which is associated with the said identifying device.

EP 0 251 868 B1